# FASCICULE DE BREVET EUROPEEN

(11) **EP 1 056 619 B1**
(45) Date de publication et mention de la délivrance du brevet: **07.03.2007**
(21) Numéro de dépôt: 99954053.7
(22) Date de dépôt: 04.11.1999
(51) Int. Cl.: B60Q 1/44

(54) **INSTALLATION DE SIGNALISATION DE LA DECELERATION D'UN VEHICULE AUTOMOBILE COMPRENANT UN FEU EMETTANT UN FLUX LUMINEUX D'INTENSITE CONSTANTE**
SIGNALISIERUNGSLEUCHTE EINER FAHRZEUGSVERZÖGERUNG MIT KONSTANTEM LICHTSTROM
INSTALLATION FOR SIGNALLING A MOTOR VEHICLE DECELERATION COMPRISING A LIGHT EMITTING A STEADY LIGHT FLOW

(30) Priorité: 21.12.1998 FR 9816098
(43) Date de publication de la demande: 06.12.2000
(73) Titulaire: VALEO VISION, 93012 Bobigny Cédex (FR)
(72) Inventeur: LELEVE, Joel, F-93800 Epinay S/Seine (FR); RIT, Jean, F-94210 La Varenne St Hilaire (FR)
(74) Mandataire: Lemaire, Marc
(86) Numéro de dépôt international: PCT/FR1999/002689
(87) Numéro de publication internationale: WO 2000/037281

(56) Documents cités:
- DE-A- 3 220 442
- DE-A- 19 536 627
- FR-A- 2 536 710
- US-A- 5 150 098

## Description

L'invention concerne une installation de signalisation de la décélération d'un véhicule automobile, comprenant un feu de signalisation ayant une plage éclairante qui s'allume en cas de décélération du véhicule, cette plage éclairante étant divisée en sections lumineuses, chaque section étant munie d'une source lumineuse propre, et des moyens pour commander l'allumage d'un nombre de sources lumineuses qui augmente avec la décélération du véhicule afin d'obtenir une surface allumée de la plage éclairante représentative de cette décélération.

Les feux de stop placés à l'arrière d'un véhicule s'allument lorsque la pédale de frein est actionnée. Ils permettent ainsi au conducteur d'un véhicule suiveur d'anticiper un ralentissement et de s'y adapter. En revanche, ces feux ne renseignent pas sur l'intensité du freinage. C'est pourquoi on a imaginé (DE 195 06 621) des feux stop, particulièrement des feux complémentaires, dont la plage éclairante est divisée en un certain nombre des sections. Plus la décélération du véhicule est importante, plus le nombre de sections allumées est élevé. La surface de la plage éclairante augmente en fonction de la décélération et fournit ainsi une indication représentative de cette dernière. Cela permet au conducteur d'un véhicule suiveur d'être informé sur l'intensité du freinage.

Toutefois, dans un feu connu de ce type, chaque section de la plage éclairante émet un flux lumineux d'intensité constante. L'intensité globale du feu est donc égale à la somme arithmétique des intensités de chacune des sections de sorte qu'elle varie de manière très importante. Elle est minimale lorsqu'une seule section est allumée et maximale lorsque toutes les sections le sont. Or l'intensité lumineuse du feu ne doit pas dépasser une valeur maximale fixée par la réglementation. Si cette valeur n'est pas dépassée lorsque toutes les sections sont allumées, le feu sera difficilement perçu lorsqu'une seule section sera allumée car son intensité lumineuse sera faible. Si l'intensité lumineuse d'une seule section est suffisante pour être perçue nettement, l'amplitude de la variation du signal, proportionnel au nombre total des sections du feu, devra être peu importante pour que l'intensité du feu ne dépasse pas la valeur maximale lorsque toutes les sections sont allumées. Ainsi les feux connus ne permettent pas de transmettre pleinement un signal représentatif de la décélération, ce qui se traduit soit par un freinage tardif du véhicule suiveur, soit par un surfreinage suivi d'une accélération.

L'invention a précisément pour objet une installation de signalisation de la décélération d'un véhicule automobile qui remédie à ces inconvénients. Elle doit permettre de délivrer un signal représentatif de la décélération qui peut varier d'une grande amplitude tout en étant perceptible à faible décélération, et cela sans que l'intensité du feu excède les normes réglementaires lorsque le feu est entièrement allumé.

Ce résultat est atteint, conformément à l'invention, par le fait que l'intensité lumineuse de la plage éclairante reste sensiblement constante quel que soit le nombre de sections lumineuses allumées.

De préférence, l'intensité lumineuse constante de la plage éclairante est obtenue en alimentant les sources lumineuses à puissance sensiblement constante.

Grâce à cette caractéristique, le feu délivre un signal qui peut varier d'une grande amplitude tout en étant perceptible même pour une faible décélération, et cela sans que l'intensité du feu excède les normes réglementaires lorsque le feu est entièrement allumé.

Selon un mode de réalisation particulier, les sources lumineuses sont telles que la tension à leurs bornes est peu dépendante de l'intensité du courant qui les traverse, l'intensité lumineuse sensiblement constante de la plage éclairante étant obtenue en alimentant les sources lumineuses par un courant électrique d'intensité sensiblement constante. Ces sources lumineuses sont constituées par exemple par une pluralité de diodes électro-luminescentes.

Les moyens pour commander l'allumage d'un nombre de sources lumineuses qui augmente avec la décélération du véhicule comprennent de préférence un capteur de décélération qui mesure la décélération du véhicule, et des moyens de connexion qui relient sélectivement les sources lumineuses à une source d'énergie électrique en fonction d'un signal de sortie du capteur de décélération.

Les moyens de connexion comprennent de préférence, pour chaque source lumineuse, un transistor monté sur le circuit d'alimentation de la source et un comparateur, recevant un signal de sortie du capteur de décélération et relié au transistor, qui bascule lorsque le signal de sortie du capteur de décélération devient supérieur à une tension de référence, ce qui rend le transistor conducteur.

D'autres caractéristiques et avantages de la présente invention apparaîtront encore à la lecture de la description qui suit d'exemples de réalisation décrits à titre illustratif en référence aux figures annexées. Sur ces figures :
- la figure 1 est une vue schématique d'une installation conforme à l'invention ;
- la figure 2 est une vue d'un mode de réalisation préféré de l'invention ;
- la figure 3 représente un feu de signalisation dans lequel les sections lumineuses sont disposées concentriquement.

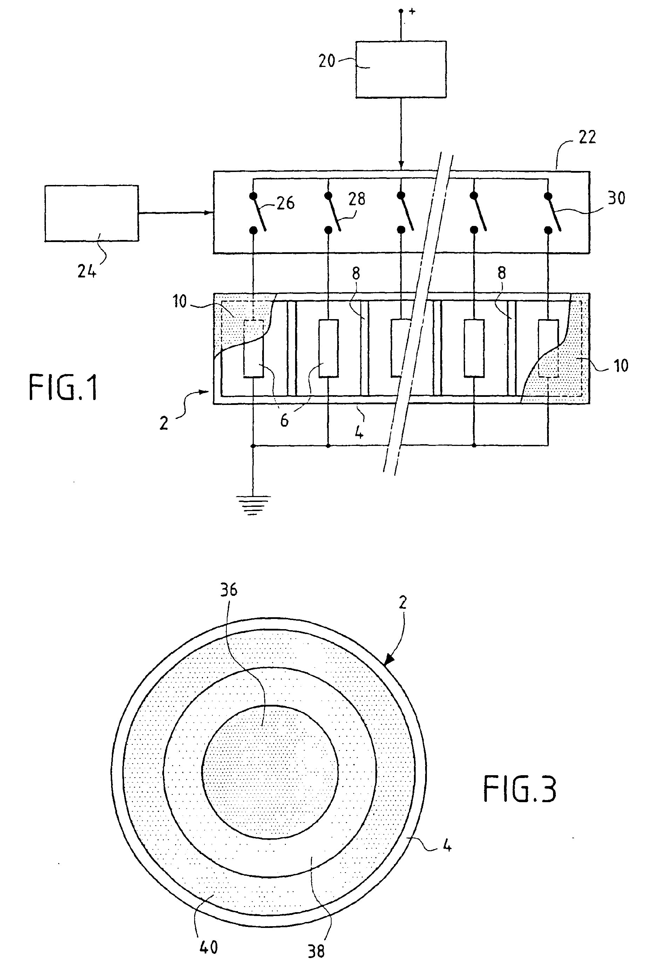

Sur la figure 1, le feu de signalisation 2 comprend un boîtier 4 qui renferme un certain nombre de sources lumineuses 6. Chaque source lumineuse peut être constituée par une lampe unique, par exemple un tube néon, ou par une série de lampes, par exemple une série de diodes électroluminescentes. Les sources lumineuses 6 sont séparées par des cloisons 8 qui divisent l'espace intérieur du boîtier 4 en autant de sections qu'il y a de sources lumineuses. La plage éclairante globale du feu 2, formée par un voyant 10 qui ferme le boîtier, est donc divisée en un nombre de sections égal à celui des sources lumineuses.

Les sources lumineuses 6 sont reliées à une source de courant électrique par l'intermédiaire de moyens qui permettent que l'intensité lumineuse de la plage éclairante reste constante quel que soit le nombre de sections lumineuses allumées. Dans l'exemple représenté, ces moyens sont constitués par un régulateur de puissance 20 qui délivre une puissance constante. Le régulateur est relié à des moyens de connexion 22 qui relient sélectivement les sources lumineuses à la source d'énergie électrique en fonction du signal de sortie délivré par le capteur de décélération 24. Lorsque la décélération est faible, les moyens de connexion ferment seulement l'interrupteur 26 de sorte que seule la première section de plage éclairante est allumée. Si la décélération augmente, c'est l'interrupteur 28 qui se ferme, ce qui allume la seconde section, et ainsi de suite jusqu'à l'interrupteur 30. A ce moment, la totalité du feu 2 est allumée. La surface allumée de la plage éclairante est donc fonction de la décélération. Elle peut être par exemple proportionnelle à cette décélération. Le feu fournit ainsi une information représentative de la décélération, ce qui permet à un véhicule suiveur de s'y adapter dans les meilleures conditions. Mais en outre, la puissance lumineuse du feu reste sensiblement égale quel que soit le nombre des sections éclairantes allumées grâce à la présence du régulateur de puissance. Lorsqu'une seule source lumineuse est alimentée, elle absorbe la totalité de la puissance fournie par le régulateur 20. Lorsque deux sources lumineuses sont alimentées, la puissance se répartit sur ces deux sources. Et lorsque toutes les sources lumineuses sont alimentées, la puissance se répartit sur toutes les sources lumineuses. Ainsi la puissance lumineuse du feu reste sensiblement constante. Grâce à cette caractéristique la surface de la plage éclairante peut varier d'une amplitude importante entre les deux extrêmes, à savoir un léger ralentissement (une seule section allumée) et un freinage d'urgence (feu entièrement allumé), et ceci sans dépasser les limites fixées par les normes réglementaires.

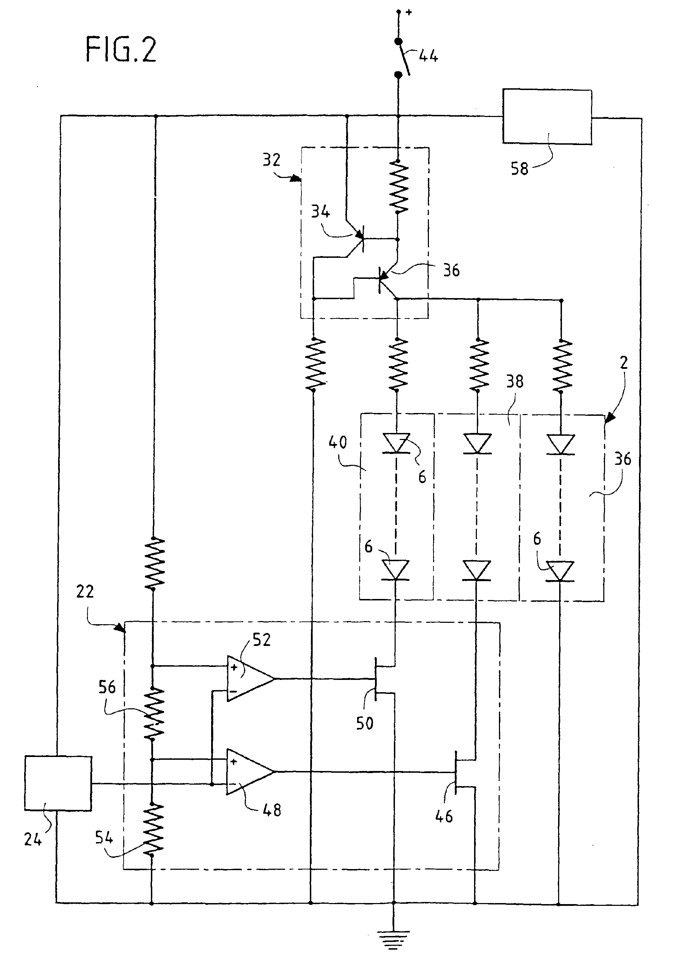

On a représenté sur la figure 2 le schéma électronique d'un mode de réalisation préféré de l'invention. Dans ce mode de réalisation chaque source lumineuse est constituée par une série de diodes électroluminescentes. Comme on le sait, la tension aux bornes des diodes électro-luminescentes est sensiblement constante (à 20% près) en fonction de l'intensité du courant qui les parcourt. Il est donc possible de réaliser une régulation de puissance assez satisfaisante en régulant seulement l'intensité du courant absorbé par les diodes. Un régulateur de courant 32 est formé par les deux transistors 34 et 36.

Sur la figure on a représenté un feu 2 qui ne comporte que trois sections, mais ce nombre pourrait naturellement être beaucoup plus élevé. L'une des sections lumineuses dite première section 36, est reliée directement à la source de courant électrique, sans passer par les moyens de connexion 22. Elle s'allume dès que l'interrupteur 44 actionné par la pédale de frein (non représentée) se ferme, indépendamment de la valeur de la décélération. Les autres sections 38 et 40 s'allument en fonction du signal de sortie du capteur de décélération 24. En variante de réalisation, on peut utiliser l'information accessible sur un réseau portant des informations sous forme multiplexée à la place du capteur de décélération.

Les moyens de connexion 22 comprennent un transistor 46 et un comparateur 48 pour la deuxième section éclairante 38, et un transistor 50 et un comparateur 52 pour la troisième section éclairante 40. La deuxième section éclairante 38 s'allume lorsque le signal de sortie du capteur de décélération 24 est supérieur à une tension de référence donnée par la résistance 54. Le transistor 46 devient conducteur ce qui connecte la source lumineuse 6 de la deuxième section 38 à la source de courant électrique et allume cette source lumineuse.

Si la décélération augmente encore, le signal de sortie du capteur de décélération 24 augmente et devient supérieur à une tension de référence plus élevée donnée par les résistances 54 et 56. Le transistor 52 devient conducteur ce qui connecte la source lumineuse 6 de la troisième section 40 à la source de courant électrique et allume cette dernière. Le feu est ainsi complètement allumé.

L'installation comporte en outre, de manière classique, une protection 58 contre les surtensions. Les résistances dans les lignes d'alimentation de chacune des sections servent à équilibrer le courant dans les diodes électro-luminescentes.

On a représenté sur la figure 3 une autre disposition possible des sections éclairantes. Le feu 2 est circulaire, et il est divisé en sections concentriques. On peut concevoir le feu de manière à ce que la section centrale 36 s'allume la première, puis les sections 38 et 40. Ou inversement, la section 40 peut s'allumer la première, puis la section 38 et enfin la section centrale 36, l'intensité lumineuse du feu restant sensiblement constante dans tous les cas.

## Revendications

1. Installation de signalisation de la décélération d'un véhicule automobile, comprenant un feu de signalisation (2) ayant une plage éclairante qui s'allume en cas de décélération du véhicule, cette plage éclairante étant divisée en sections lumineuses (36, 38, 40), chaque section étant munie d'une source lumineuse propre, et des moyens pour commander l'allumage d'un nombre de sources lumineuses (6) qui augmente avec la décélération du véhicule afin d'obtenir une surface allumée de la plage éclairante représentative de cette décélération, **caractérisée en ce que** l'intensité lumineuse de la plage éclairante reste sensiblement constante quel que soit le nombre de sections lumineuses (36, 38, 40) allumées.

2. Installation selon la revendication 1 **caractérisée en ce que** l'intensité lumineuse sensiblement constante de la plage éclairante est obtenue en alimentant les sources lumineuses (6) à puissance sensiblement constante.

3. Installation selon l'une des revendications 1 ou 2 **caractérisée en ce que** les sources lumineuses (6) sont telles que la tension à leurs bornes est peu dépendante de l'intensité du courant qui les traverse, l'intensité lumineuse constante de la plage éclairante étant obtenue en alimentant les sources lumineuses (6) par un courant électrique d'intensité constante.

4. Installation selon la revendication 3 **caractérisée en ce que** les sources lumineuses (6) sont constituées par une pluralité de diodes électroluminescentes.

5. Installation selon l'une quelconque des revendications 1 à 4 **caractérisée en ce que** les moyens pour commander l'allumage d'un nombre de sources lumineuses (6) qui augmente avec la décélération du véhicule comprennent un capteur de décélération (24) qui mesure la décélération du véhicule, et des moyens de connexion (22) qui relient sélectivement les sources lumineuses (6) à une source d'énergie électrique en fonction d'un signal de sortie du capteur de décélération (24).

6. Installation selon la revendication 5 **caractérisée en ce que** les moyens de connexion comprennent, pour au moins une source lumineuse, un transistor (46, 50) monté sur le circuit d'alimentation de la source et un comparateur (48,52), recevant une signal de sortie du capteur de décélération (24) et relié au transistor (46, 50), qui bascule lorsque le signal de sortie du capteur de décélération (24) devient supérieur à une tension de référence, ce qui rend le transistor conducteur.

## Claims

1. An indicator installation for signalling the deceleration of a motor vehicle, comprising an indicator light (2) having a luminous zone which lights up in the event of deceleration of the vehicle, the said luminous zone being divided into luminous sections (36, 38, 40), with each section being provided with its own light source, and means for controlling the lighting up of a number of light sources (6) which increases with the deceleration of the vehicle, whereby to obtain an illuminated surface of the luminous zone which represents the said deceleration, **characterised in that** the luminous intensity of the luminous zone remains substantially constant regardless of the number of luminous sections (36, 38, 40) that happen to be lit up.

2. An installation according to Claim 1, **characterised in that** the substantially constant luminous intensity of the luminous zone is obtained by energising the light sources (6) at substantially constant power.

3. An installation according to Claim 1 or Claim 2, **characterised in that** the light sources (6) are such that the voltage at their terminals is hardly at all dependent on the intensity of the current passing through them, the constant luminous intensity of the luminous zone being obtained by energising the light sources (6) with an electrical current of constant intensity.

4. An installation according to Claim 3, **characterised in that** the light sources (6) consist of a plurality of light emitting diodes.

5. An installation according to any one of Claims 1 to 4, **characterised in that** the means for controlling lighting up of a number of light sources (6) which increases with the deceleration of the vehicle comprises a deceleration sensor (24) that measures the deceleration of the vehicle, together with connecting means (22) which selectively connect the light sources (6) to a source of electrical energy as a function of an output signal from the deceleration sensor (24).

6. An installation according to Claim 5, **characterised in that** the connecting means comprise, for at least one light source, a transistor (46, 50) which is connected on the power circuit of the source, and a comparator (48, 52) for receiving an output signal from the deceleration sensor (24) and connected to the transistor (46, 50), which switches over when the output signal from the deceleration sensor (24) becomes higher than a reference voltage, whereby to render the transistor conducting.

## Patentansprüche

1. Einrichtung zum Anzeigen der Verzögerung eines Kraftfahrzeugs, mit einer Signalleuchte (2), die eine Leuchtfläche aufweist, die bei einer Fahrzeugverzögerung aufleuchtet, wobei die Leuchtfläche in Leuchtsegmente (36, 38, 40) unterteilt ist, wobei jedes Segment mit einer eigenen Lichtquelle versehen ist, und mit Mitteln zum Steuern des Einschaltens einer Anzahl von Lichtquellen (6), die mit der Fahrzeugverzögerung zunimmt, um eine für diese Verzögerung repräsentative, aufleuchtende Fläche der Leuchtfläche zu erhalten,
**dadurch gekennzeichnet, dass** die Helligkeit der Leuchtfläche unabhängig von der Anzahl eingeschalteter Leuchtsegmente (36, 38, 40) im Wesentlichen konstant bleibt.

2. Einrichtung nach Anspruch 1,
**dadurch gekennzeichnet, dass** die im Wesentlichen konstante Helligkeit der Leuchtfläche **dadurch** erzielt wird, dass die Lichtquellen (6) mit im Wesentlichen konstanter Leistung gespeist werden.

3. Einrichtung nach einem der Ansprüche 1 oder 2,
**dadurch gekennzeichnet, dass** die Lichtquellen (6) derart sind, dass die Spannung an ihren Klemmen nur in geringem Maße von der Stärke des durch sie fließenden Stroms abhängt, wobei die konstante Helligkeit der Leuchtfläche **dadurch** erzielt wird, dass die Lichtquellen (6) mit einem Strom konstanter Stärke gespeist werden.

4. Einrichtung nach Anspruch 3,
**dadurch gekennzeichnet, dass** die Lichtquellen (6) aus einer Vielzahl von Leuchtdioden gebildet sind.

5. Einrichtung nach einem der Ansprüche 1 bis 4,
**dadurch gekennzeichnet, dass** die Mittel zum Steuern des Einschaltens einer Anzahl von Lichtquellen (6), die mit der Fahrzeugverzögerung zunimmt, einen Verzögerungssensor (24), der die Fahrzeugverzögerung misst, und Anschlussmittel (22) umfassen, die in Abhängigkeit von einem Ausgangssignal des Verzögerungssensors (24) die Lichtquellen (6) selektiv mit einer Stromquelle verbinden.

6. Einrichtung nach Anspruch 5,
**dadurch gekennzeichnet, dass** die Anschlussmittel wenigstens für eine Lichtquelle einen im Speisestromkreis der Lichtquelle angebrachten Transistor (46, 50) und einen ein Ausgangssignal des Verzögerungssensors (24) empfangenden und mit dem Transistor (46, 50) verbundenen Komparator umfassen, der kippt, wenn das Ausgangssignal des Verzögerungssensors (24) stärker als eine Referenzspannung wird, wodurch der Transistor leitend wird.
